# DEMANDE DE BREVET EUROPEEN

(11) **EP 1 726 205 A1**
(43) Date de publication de la demande: **29.11.2006**
(21) Numéro de dépôt: 06364001.5
(22) Date de dépôt: 03.03.2006
(51) Int. Cl.: A01F 25/13

(54) **Dispositif d'emballage d'un stock de matières en vrac, notamment pour fourrage de silos agricole**

(30) Priorité: 04.03.2005 FR 0502221
(71) Demandeur: Duhamel, Gilbert, 53150 La Chapelle Rainsouin (FR)
(72) Inventeur: Duhamel, Gilbert, 53150 La Chapelle Rainsouin (FR)

(57) **Abrégé**

1/ Dispositif d'emballage hermétique d'un stock de matières en vrac par des bâches films (8) ou similaire.
2/ L'invention concerne un dispositif pour lester le pourtour des silos d'ensilages ou produits périssables, par des bras porteurs de tubes tendeurs ou presseurs.
3/ Ce dispositif est constitué d'un rail (1) glissière d'une certaine longueur, plat entre deux gorges (21) extérieures latérales arrondies de ces deux angles diagonaux vers le centre. Fixé sur le haut de chaque mur de l'enceinte (10), et permettant de recevoir des bras (2) tendeurs qui se placent et se fixent d'un quart de tour par clipsage emboîtable (3).
4/ Dispositif selon l'une des revendications permettant de retendre chaque tige tendeur indépendamment par une simple remontée du coulisseau (4) autobloquant, sur la tige verticale (5).
5/ Dispositif en bas de la tige (5) coulissante verticale, constitant d'un patin mobile (6) qui relie les deux tubes (7) parallèles, s'incline et se plaque à la couverture ou des bâches (8) pour empêcher toute infiltration d'eau ou d'air.

## Description

La présente invention a pour objet d'apporter une solution efficace aux problèmes de manipulations actuelles.

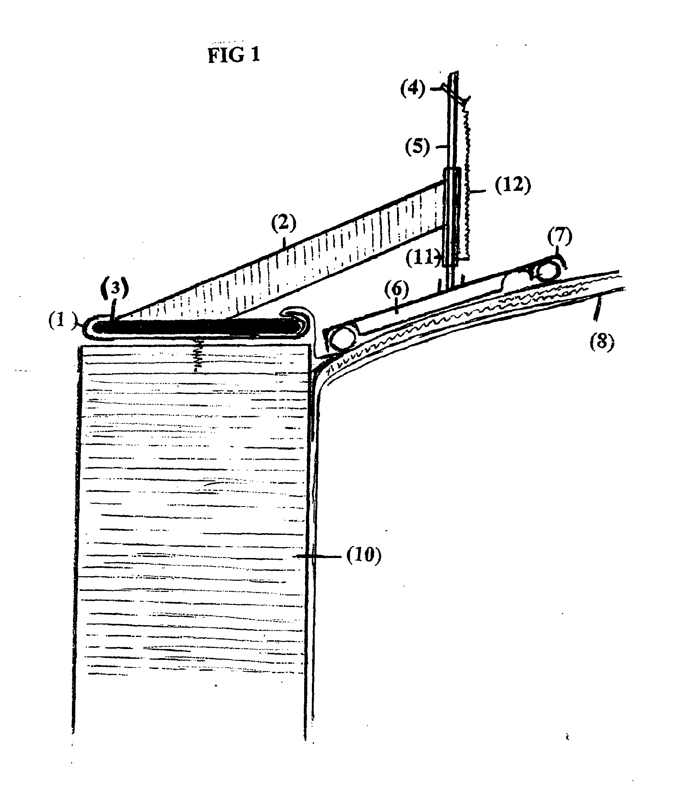

La fig. 1, est une vue en coupe du dispositif placé sur le silo.

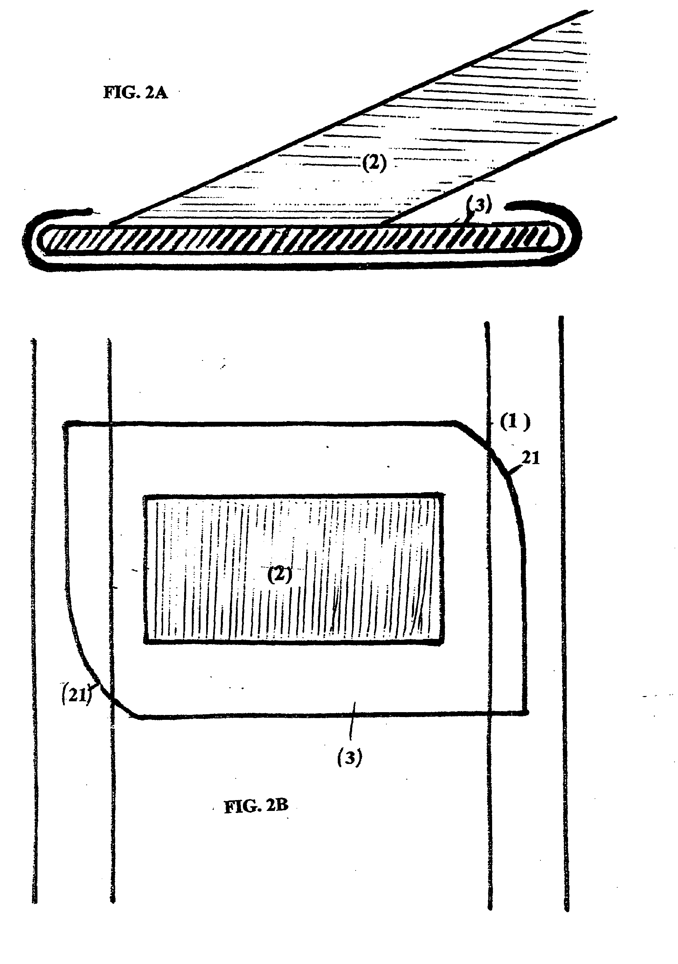

La fig. 2A, est une vue en coupe de la base du bras dans son premier mode de réalisation.
La fig. 2B, est une vue de dessus de la base du bras dans son premier mode de réalisation.

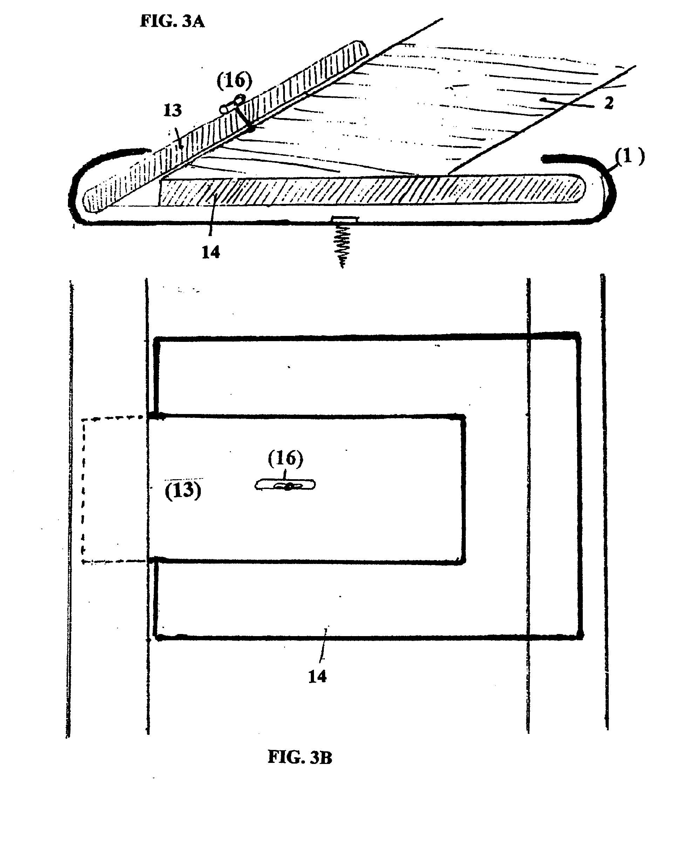

La fig. 3A, est une vue en coupe de la base du bras dans son second mode de réalisation.
La fig. 3B, est une vue de dessus de la base du bras dans son second mode de réalisation.

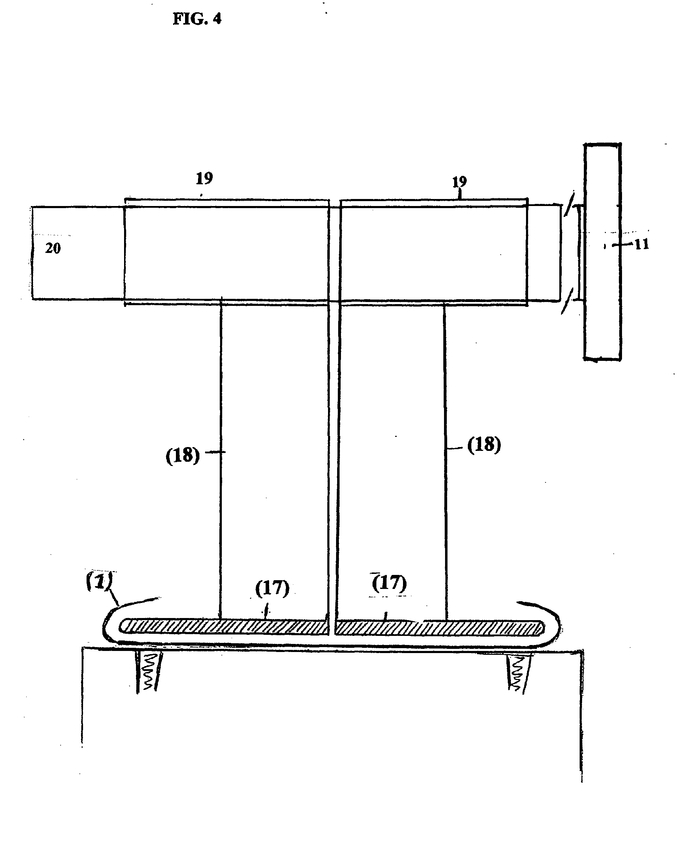

La fig. 4, est une vue en coupe du bras selon le troisième mode de réalisation.

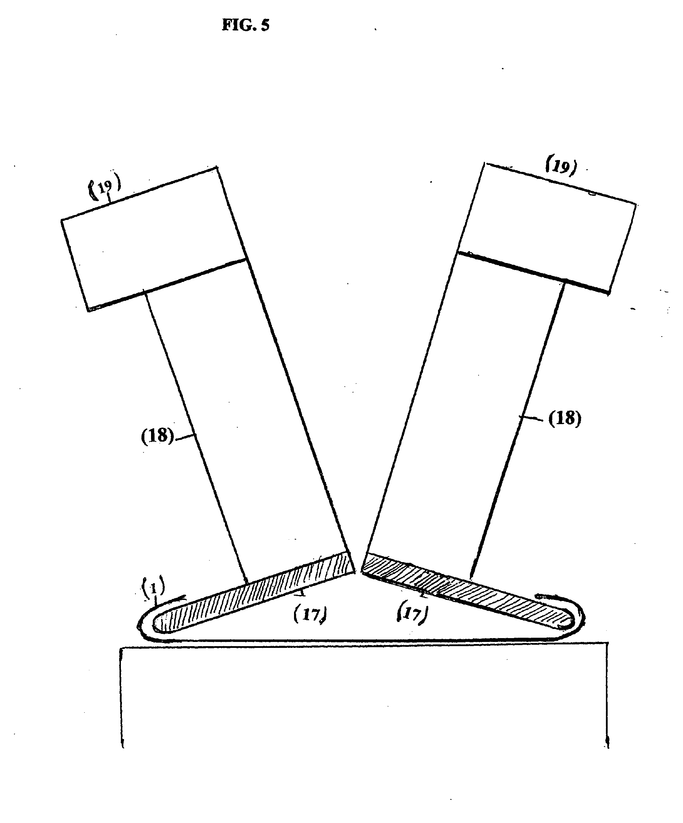

La fig. 5, est une vue en coupe du bras ouvert selon le troisième mode de réalisation.

Elle consiste d'un dispositif constitué d'un rail glissière (1), placé au dessus et sur toute la longueur du mur (10) du silo, donc, sur ces trois faces. Ce rail glissière (1) reçoit un mono-bras (2). A l'extrémité supérieure du mono-bras (2), est fixée une tige creuse (11) destinée à recevoir une tige coulissante (5) qui prend appuie dans un socle, sur un patin (6), dont les deux extrémitées sont munies de moyens d'appuis (7). La tige coulissante possède un coulisseau (4) qui est mis en tension par un ressort ou tendeur (12).

Selon un premier mode de réalisation, la base du mono-bras, a une forme de clé (3), un plat rectangulaire avec deux angles diagonaux arrondis, qui se verrouille dans le rail (1) par un quart de tour entre les deux gorges.

Selon un second mode de réalisation, la base du mono-bras est constituée d'un plat (15), qui rentre d'abord dans la gorge du rail (1) et qui est définitivement bloqué par une languette (13), glissée dans une lumière et vissée par un écrou papillon (16), selon un dernier mode de réalisation spécifique, le mono-bras (2) est formé de deux tubes (18), identiques chacun surmonté d'un tube horizontal (18), le blocage de ces deux tubes étant assurés par un bras (20), la base des deux tubes (18) étant constitués de deux plats indentiques (17).

Dans l'état de la technique existante, cette pression est habituellement assurée par la pose de sacs chargés de sable sur tout le pourtour du silo.

Ce système nécessite donc des manipulations fréquentes et pénibles, conduisant fréquemment à la rupture de la bâche, ce qui est particulièrement néfaste à la priorité de conservation de l'ensilage. Le dispositif de l'invention prioritaire assure le maintien de plusieurs couches de films plastiques (8), bâches ou couvertures (8), en pression permanente sur un stock de matières en vrac, empêchant toute entrée d'air ou pluie, dans. Par la longueur de la tige coulissante (5), il est possible de pouvoir maintenir en pression les couches de films conservateurs de nourriture à différents niveaux du remplissage. Pour faire un second remplissage, le mono-bras (2), avec sa clé (3) est déboité et enlevé en un temps inférieur à tous systèmes, et sans effort physique.

Auparavant, les boudins de un mètre de long, remplis de sable et pesant jusqu'à 25kg, prenaient beaucoup de temps et d'efforts.

Le rail (1) glissière du pourtout a une autre utilité, très importante pour la sécurité des personnes qui oeuvrent sur le pourtour du stockage, à environ deux mètres du vide vertical.

Dans ce rail (1), on peut insérer tous les trois ou quatre mètres un bras muni à sa base d'un des trois systèmes de clés (3). Ce même bras inséré dans le rail par inversement vers l'extérieur du contenant en prolongeant la tige, celle-ci devient garde fou avec quelques rangées de cordages.

## Revendications

1. Dispositif d'emballage d'un stock de matières en vrac, notamment du fourrage **caractérisé en ce qu'**il est constitué d'un rail glissière (1) placé au dessus et sur toute la longueur du mur (10) du silo, ce rail (1) recevant un monobras (2), à l'extrémité supérieur du bras (1) étant fixée une tige creuse (11) destinée elle-même à recevoir une tige coulissante (5) qui prend appui, à sa base, sur un patin (6) dont les extrémités sont munies de moyens d'appuis (7), la tige coulissante (5) possédant un coulisseau (4) qui est mis en tension par un resssort tendeur (12).

2. Dispositif d'emballage d'un stock de matières en vrac selon la revendication (1) **caractérisé en ce que** l'extrémité inférieur du monobras (2) coulissant dans le rail (1) a une forme de clé (3), un plat rectangulaire dont les deux angles diagonaux sont arrondis, qui se verrouille dans le rail (1) par un quart de tour entre les deux gorges du rail (1).

3. Dispositif d'emballage d'un stock de matières en vrac selon la revendication 1 ou 2 , **caractérisé en ce que** la base du monobras (2) est constitué d'un plat (14) qui est introduit dans la gorge du rail (1). Il est définitivement bloqué par une languette (13) glissée dans la lumière et vissée par un écrou (16).

4. Dispositif d'emballage d'un stock de matières en vrac selon la revendication 1, **caractérisé en ce que** le monobras (2) est lui-même constitué de 2 tubes identiques (18), dont la base est constituée de deux blocs (17) la partie supérieure de chacun des tubes (18) recevant un tube creux (19), ces deux tubes (19) étant bloqués par un bras (20).

5. Dispositif d'emballage selon l'une quelquonque des revendications précédente, **caractérisée en** se qu'il comporte un dispositif coulisseur actionnant la tige coulissante (5) par mise en tension du tendeur (12) ou ressort par élévation vers le sommet. Le coulisseau (4) étant en traction par les ressorts ou tendeur, se met en travers et s'autobloque à une quelconque position en tension.

6. Dispositif de stockage, notamment d'ensilage, à trois murs formant un rectangle **caractérisé par le fait que** chaque mur (10) comporte un rail (1) de coulissement dans lequel se trouve une pluralité de dispositifs selon l'une quelconque des revendications précédentes.
